# EUROPEAN PATENT APPLICATION

(11) **EP 4 319 299 A1**
(43) Date of publication of application: **07.02.2024**
(21) Application number: 23188786.0
(22) Date of filing: 31.07.2023
(51) Int. Cl.: H04W 36/00

(54) **CANDIDATE CELL CONFIGURATION FOR L1/L2-BASED MOBILITY**

(30) Priority: 03.08.2022 US 202263370290 P; 10.07.2023 US 202318220197
(71) Applicant: MediaTek Inc., Hsinchu City 30078 (TW)
(72) Inventor: TSENG, Li-Chuan, Hsinchu City (TW); TSAI, Chun-Fan, Hsinchu City (TW); CHEN, Yi-Ru, Hsinchu City (TW)
(74) Representative: Patentship Patentanwaltsgesellschaft mbH

(57) **Abstract**

A method of L1/L2-based mobility with signaling optimization using base (reference) configuration and replaceable (delta) configuration for candidate cells is proposed. All candidates can be configured at different levels provided by Radio Resource Control (RRC) signaling. To support L1/L2-triggered mobility (LTM), there is a common base configuration for candidates, and the candidates are modelled as replaceable configurations which are delta configurations on top of the common base configuration (instead of UE's current RRC configuration). The common and replaceable configurations are also referred to as reference configuration and candidate delta configuration. The candidate delta configuration is applied on top of the reference configuration to form a complete candidate configuration for handover.

## Description

### TECHNICAL FIELD

The disclosed embodiments relate generally to wireless communication, and, more particularly, to a method for Ll/L2-based mobility enhancement in 5G New Radio (NR) cellular communication networks.

### BACKGROUND

The wireless communications network has grown exponentially over the years. A long-term evolution (LTE) system offers high peak data rates, low latency, improved system capacity, and low operating cost resulting from simplified network architecture. LTE systems, also known as the 4G system, also provide seamless integration to older wireless network, such as GSM, CDMA and universal mobile telecommunication system (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). The 3^{rd} generation partner project (3GPP) network normally includes a hybrid of 2G/3G/4G systems. The next generation mobile network (NGMN) board has decided to focus the future NGMN activities on defining the end-to-end requirements for 5G new radio (NR) systems. In 5G NR, the base stations are also referred to as gNodeBs or gNBs.

Frequency bands for 5G NR are being separated into two different frequency ranges. Frequency Range 1 (FR1) includes sub-6GHz frequency bands, some of which are bands traditionally used by previous standards, but has been extended to cover potential new spectrum offerings from 410MHz to 7125MHz. Frequency Range 2 (FR2) includes frequency bands from 24.25GHz to 52.6GHz. Bands in FR2 in this millimeter wave range have shorter range but higher available bandwidth than bands in FR1. For UEs in RRC Idle mode mobility, cell selection is the procedure through which a UE picks up a specific cell for initial registration after power on, and cell reselection is the mechanism to change cell after UE is camped on a cell and stays in idle mode. For UEs in RRC Connected mode mobility, handover is the procedure through which a UE hands over an ongoing session from the source gNB to a neighboring target gNB.

The concept of "candidate cell" has been introduced for conditional handover (CHO) and conditional PSCell addition/change (CPA/CPC). The UE applies candidate cell configurations received earlier upon cell switch (CHO/CPAC execution). Upon CHO/CPC/CPA execution, other candidates are released. Note that CHO configuration can be delta configuration, meaning that once applied, UE cannot switch back to source cell without another RRC configuration from target cell (e.g., to add source cell as a candidate cell). In R18 L1/L2-based inter-cell mobility, pre-configured candidate cells are also considered. L1/L2 signaling (e.g., MAC CE) is used to trigger UE switching to a candidate cell.

With the existing CHO/CPAC procedures, a candidate cell must be released and configured again. With L1/L2 mobility, candidate cells should be kept for enhanced performance. This is because in FR2, due to smaller coverage and denser deployment, UE is likely to switch back-and-forth among a set of candidate/active cells. It is thus desired to allow UE to switch to another candidate cell, or back to original serving cell, without receiving additional RRC reconfiguration message.

### SUMMARY

A method of L1/L2-based mobility with signaling optimization using base (reference) configuration and replaceable (delta) configuration for candidate cells is proposed. All candidates can be configured at different levels, provided by Radio Resource Control (RRC) signaling, e.g., *RRCReconfiguration.* To support L1/L2-triggered mobility (LTM), there is a common base configuration for candidates, and the candidates are modelled as replaceable configurations which are delta configurations on top of the common base configuration (instead of UE's current RRC configuration). The common and replaceable configurations are also referred to as reference configuration and candidate delta configuration. The candidate delta configuration is applied on top of the reference configuration to form a complete candidate configuration for handover.

In one embodiment, a UE maintains a configuration in a serving cell of a mobile communication network, wherein the configuration comprises a base configuration and one or more replaceable configurations for corresponding candidate cells. The UE receives a cell-switching command from the network to handover from the serving cell to a first target cell belonging to the candidate cells. The UE applies a first replaceable configuration of the first target cell on top of the base configuration upon receiving the cell switching command, wherein the first replaceable configuration and the base configuration form a complete configuration for the first target cell.

More specifically, a first aspect of the invention relates to a method, comprising: maintaining a configuration by a User Equipment (UE) in a serving cell of a mobile communication network, wherein the configuration comprises a base configuration and one or more replaceable configurations for corresponding candidate cells; receiving a cell-switching command from the network to handover from the serving cell to a first target cell belonging to the candidate cells; and applying a first replaceable configuration of the first target cell on top of the base configuration upon receiving the cell switching command, wherein the first replaceable configuration and the base configuration form a complete configuration for the first target cell.

In a first embodiment of the first aspect, the configuration is contained in a radio resource control (RRC) reconfiguration message sent from the network. In a second embodiment of the first aspect in combination with the first embodiment of the first aspect, the base configuration is modified by another RRC reconfiguration message. In a third embodiment of the first aspect in combination with the first embodiment of the first aspect, the replaceable configuration is modified by another RRC reconfiguration message. In a fourth embodiment of the first aspect, the base configuration comprises configuration information for each serving cell or for each cell group. In a fifth embodiment of the first aspect in combination with the fourth embodiment of the first aspect, the replaceable configuration is for the serving cell, and wherein the replaceable configuration comprises a physical cell ID and SSB configuration of a corresponding candidate cell. In a sixth embodiment of the first aspect in combination with the fourth embodiment of the first aspect, the replaceable configuration is for a cell group, and wherein the replaceable configuration comprises configuration of a SpCell and one or more SCells of a corresponding candidate cell. In a seventh embodiment of the first aspect, the UE switches from the first target cell to a second target cell by applying a second replaceable configuration of the second target cell on top of the base configuration. In an eighth embodiment of the first aspect in combination with the seventh embodiment of the first aspect, the second replaceable configuration and the base configuration form a complete configuration for the second target cell. In a ninth embodiment of the first aspect, the UE is equipped with more than one radio link control or media access control (RLC/MAC) protocol stacks and more than one physical layer hardware modules.

A second aspect of the invention relates to a User Equipment (UE), comprising: a control circuit that maintains a configuration in a serving cell of a mobile communication network, wherein the configuration comprises a base configuration and one or more replaceable configurations for corresponding candidate cells; a receiver that receives a cell-switching command from the network to handover from the serving cell to a first target cell belonging to the candidate cells; and a handover handling circuit that applies a first replaceable configuration of the first target cell on top of the base configuration upon receiving the cell switching command, wherein the first replaceable configuration and the base configuration form a complete configuration for the first target cell.

In a first embodiment of the second aspect, the configuration is contained in a radio resource control (RRC) reconfiguration message sent from the network. In a second embodiment of the second aspect in combination with the first embodiment of the second aspect, the base configuration is modified by another RRC reconfiguration message. In a third embodiment of the second aspect in combination with the first embodiment of the second aspect, the replaceable configuration is modified by another RRC reconfiguration message. In a fourth embodiment of the second aspect, the base configuration comprises configuration information for each serving cell or for each cell group.

Other embodiments and advantages are described in the detailed description below. This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates an exemplary 5G New Radio (NR) network supporting L1/L2-tirggered mobility (LTM) with candidate cell configuration in accordance with aspects of the current invention.
Figure 2 illustrates simplified block diagrams of wireless devices, e.g., a UE and a gNB in accordance with embodiments of the current invention.
Figure 3 illustrates different mobility procedures and corresponding RRC reconfiguration.
Figure 4 illustrates a simplified block diagram of a UE supporting subsequent LTM with reconfigurations in accordance with embodiments of the current invention.
Figure 5 illustrates both cell group level reconfiguration and serving cell level reconfiguration for candidate configuration.
Figure 6 illustrates the concept of base and replaceable configuration for candidate cells to support subsequent LTM with signaling optimization.
Figure 7 is a message sequence flow between a UE, a source cell, and a target cell for UE mobility with base and replaceable configuration in accordance with one novel aspect.
Figure 8 is a flow chart of a method of L1/L2-based mobility with signaling optimization using base and replaceable configuration for candidate cells in accordance with one novel aspect.

### DETAILED DESCRIPTION

Reference will now be made in detail to some embodiments of the invention, examples of which are illustrated in the accompanying drawings.

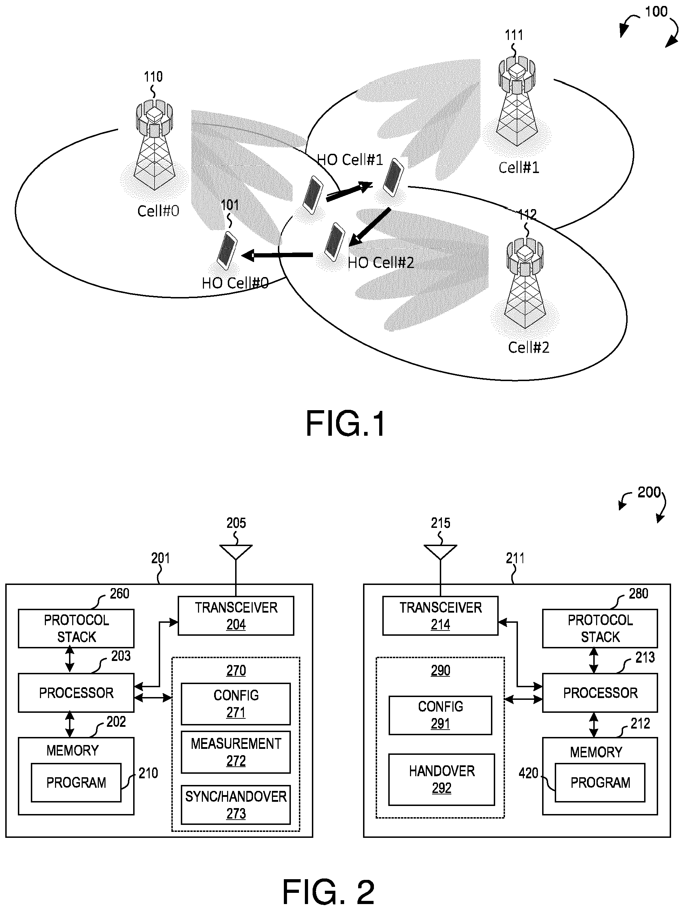

Figure 1 illustrates an exemplary 5G New Radio (NR) network 100 supporting L1/L2-tirggered mobility (LTM) with candidate cell configuration in accordance with aspects of the current invention. The 5G NR network 100 comprises a User Equipment (UE) 101 and a plurality of base stations including gNB 110, gNB 111, and gNB 112. Initially, UE 101 is communicatively connected to a serving gNB 110 in Cell#0, which provides radio access using a Radio Access Technology (RAT) (e.g., the 5G NR technology). The UE 101 may be a smart phone, a wearable device, an Internet of Things (IoT) device, and a tablet, etc. Alternatively, UE 101 may be a Notebook (NB) or Personal Computer (PC) inserted or installed with a data card which includes a modem and RF transceiver(s) to provide the functionality of wireless communication.

Frequency bands for 5G NR are being separated into two different frequency ranges. Frequency Range 1 (FR1) includes sub-6GHz frequency bands, some of which are bands traditionally used by previous standards, but has been extended to cover potential new spectrum offerings from 410MHz to 7125MHz. Frequency Range 2 (FR2) includes frequency bands from 24.25GHz to 52.6GHz. Bands in FR2 in this millimeter wave range have shorter range but higher available bandwidth than bands in FR1. The 5G core function receives all connection and session related information and is responsible for connection and mobility management tasks. For UEs in radio resource control (RRC) Idle mode mobility, cell selection is the procedure through which a UE picks up a specific cell for initial registration after power on, and cell reselection is the mechanism to change cell after UE is camped on a cell and stays in idle mode. For UEs in RRC Connected mode mobility, handover is the procedure through which a UE hands over an ongoing session from the source gNB to a neighboring target gNB.

In the example of Figure 1, at an earlier time, gNB 110 and Cell#0 may be considered as the best cell, which provides communication coverage for a geographic coverage area in which communications with UE 101 is supported via a communication link/beam. Later on, gNB 111 and Cell#1 may become the best cell, which provide communication coverage for a geographic coverage area in which communications with UE 101 is supported via a communication link/beam. Similarly, gNB 112 and Cell#2 may become the best cell, which provide communication coverage for a geographic coverage area in which communications with UE 101 is supported via a communication link/beam. Further, gNB 110 and Cell#0 may become the best cell again, which provide communication coverage for a geographic coverage area in which communications with UE 101 is supported via a communication link/beam. Through the mobility procedures, UE 101 performs handover from Cell#0 to Cell#1, to Cell#2, and back to Cell#0.

The concept of "candidate cell" has been introduced for conditional handover (CHO) and conditional PSCell addition/change (CPA/CPC). The UE applies candidate cell configurations received earlier upon cell switch (CHO/CPAC execution). Upon CHO/CPC/CPA execution, other candidates are released, e.g., a candidate cell must be released and configured again. With L1/L2 mobility, candidate cells should be kept for enhanced performance. This is because in FR2, due to smaller coverage and denser deployment, UE is likely to switch back-and-forth among a set of candidate/active cells.

In accordance with one novel aspect, a method of for L1/L2-based mobility with candidate cell configuration is proposed. All candidates can be configured at different levels, provided by Radio Resource Control (RRC) signaling, e.g., *RRCReconfiguration.* To support L1/L2-triggered mobility (LTM), there is a common base configuration for candidates, and the candidates are modelled as replaceable configurations which are delta configurations on top of the common base configuration (instead of UE's current RRC configuration). The common and replaceable configurations are also referred to as reference configuration and candidate delta configuration. The candidate delta configuration is applied on top of the reference configuration to form a complete candidate configuration for handover. Under the proposed method, UE is allowed to switch to different candidate cells or back to the original serving cell without receiving additional RRC reconfiguration message.

In the example of Figure 1, Cell#0 is the original serving cell of UE 101, Cell#1 and Cell#2 are the candidate cells. UE 101 maintains a common base configuration, a first delta configuration for Cell#1, and a second delta configuration for Cell#2. Later on, UE 101 handovers to Cell#1 by applying the first delta configuration on top of the common base configuration. When UE 101 handovers from Cell#1 to Cell#2, UE 101 applies the second delta configuration on top of the common base configuration. Note that UE 101 can handover back to Cell#0 at a later time without receiving additional RRC reconfiguration message from the network, provided that a delta configuration for Cell#0 is provided by the network and maintained by the UE.

Figure 2 illustrates simplified block diagrams of wireless devices, e.g., a UE 201 and a gNB 211 in accordance with embodiments of the current invention in 5G NR network 200. The gNB 211 has an antenna 215, which transmits and receives radio signals. An RF transceiver module 214, coupled with the antenna 215, receives RF signals from the antenna 215, converts them to baseband signals and sends them to the processor 213. The RF transceiver 214 also converts received baseband signals from the processor 213, converts them to RF signals, and sends out to the antenna 215. The processor 213 processes the received baseband signals and invokes different functional modules to perform features in the gNB 211. The memory 212 stores program instructions and data 220 to control the operations of the gNB 211. In the example of Figure 2, the gNB 211 also includes a protocol stack 280 and a set of control function modules and circuits 290. The protocol stack 280 may include a Non-Access-Stratum (NAS) layer to communicate with an AMF/SMF/MME entity connecting to the core network, a Radio Resource Control (RRC) layer for high layer configuration and control, a Packet Data Convergence Protocol/Radio Link Control (PDCP/RLC) layer, a Media Access Control (MAC) layer, and a Physical (PHY) layer. In one example, the control function modules and circuits 290 include a configuration circuit for providing configuration of candidate cells for UE, and a handover handling circuit for sending cell-switch to the UE upon handover decision.

Similarly, the UE 201 has a memory 202, a processor 203, and an RF transceiver module 204. The RF transceiver 204 is coupled with the antenna 405, receives RF signals from the antenna 205, converts them to baseband signals, and sends them to the processor 203. The RF transceiver 204 also converts received baseband signals from the processor 203, converts them to RF signals, and sends out to the antenna 205. The processor 203 processes the received baseband signals (e.g., comprising an SCell/PSCell addition/activation command) and invokes different functional modules and circuits to perform features in the UE 201. The memory 202 stores data and program instructions 210 to be executed by the processor 203 to control the operations of the UE 201. Suitable processors include, by way of example, a special purpose processor, a Digital Signal Processor (DSP), a plurality of micro-processors, one or more microprocessor associated with a DSP core, a controller, a microcontroller, Application Specific Integrated Circuits (ASICs), File Programmable Gate Array (FPGA) circuits, and other type of Integrated Circuits (ICs), and/or state machines. A processor associated with software may be used to implement and configure features of the UE 201.

The UE 201 also includes a protocol stack 260 and a set of control function modules and circuits 270. The protocol stack 260 may include a NAS layer to communicate with an AMF/SMF/MME entity connecting to the core network, an RRC layer for high layer configuration and control, a PDCP/RLC layer, a MAC layer, and a PHY layer. The Control function modules and circuits 270 may be implemented and configured by software, firmware, hardware, and/or combination thereof. The control function modules and circuits 270, when executed by the processor 203 via program instructions contained in the memory 202, interwork with each other to allow the UE 201 to perform embodiments and functional tasks and features in the network. In one example, the control function modules and circuits 270 include a configuration circuit 271 for obtaining measurement and configuration information of candidate cells, a measurement circuit 272 for performing and reporting measurements, and a handover handling circuit 273 for performing synchronization and handover procedure based on the common base configuration and replaceable configuration for the candidate cells received from the network. The base configuration and the replaceable configuration form a complete configuration of the candidate target cells.

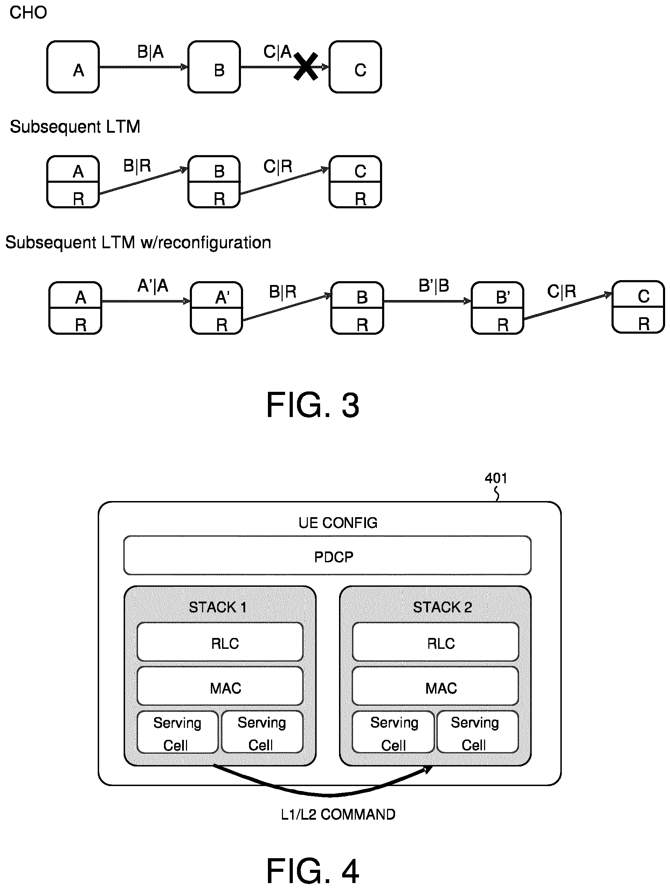

Figure 3 illustrates different mobility procedures and corresponding RRC reconfiguration. UE mobility can be L1, L2, or L3-based. UE is originally served by a serving base station in a serving cell and receives corresponding RRC configuration on a set of candidate cells. For the set of candidate cells, cells can be prepared (i.e., possessing UE context), and UE processes and maintains the RRC configurations for the cells. In the example of Figure 3, UE starts from cell A, and is configured with candidates cell B and cell C.

In CHO, when one CHO candidate (Cell B) is chosen, its configuration is applied (on top of Cell A), and other candidates (including Cell C) are released because their configuration (C|A) is no longer applicable after reconfiguration (Cell B). Therefore, subsequent CHO (without RRC reconfiguration) is not supported. In subsequent LTM, in addition to the current RRC configurations (A, B, or C), the UE maintains a separate reference configuration (R), and the candidate configurations (B|R, C|R) and provided as delta configurations on top of the reference configuration. Upon cell switch, the target configuration based on R is applied, and this allows subsequent LTM. It is also possible that the network performs RRC reconfiguration after candidate configurations (A to A') or even after cell switch (B to B'). With reference configuration maintained separately, the candidate configurations can still be applied upon LTM cell switch, as long as the reference configuration is not modified.

Figure 4 illustrates a simplified block diagram of a UE supporting subsequent LTM with reconfigurations in accordance with embodiments of the current invention. Different levels of candidate reconfiguration can be applied for candidate configuration. In L1/L2-based mobility, due to CU-DU-RU split, intra-CU cells share the same PDCP, and they even share the same RLC and MAC when connected to the same DU. In general, RLC, MAC, and PHY layer can be reconfigured with natural support for CA/DC. PHY layer can be reconfigured with a CA-like model, only some of configured cells are activated as the candidate cells for handover.

In the example of Figure 4, UE 401 may be equipped with multiple RLC/MAC protocol stacks and PHY hardware instances for serving cells. Depending on its capability, UE 401 may apply candidate configurations upon RRC reconfiguration, using one of the stacks. Then upon L1/L2 command, UE 401 simply switches to the corresponding stack of the target cell.

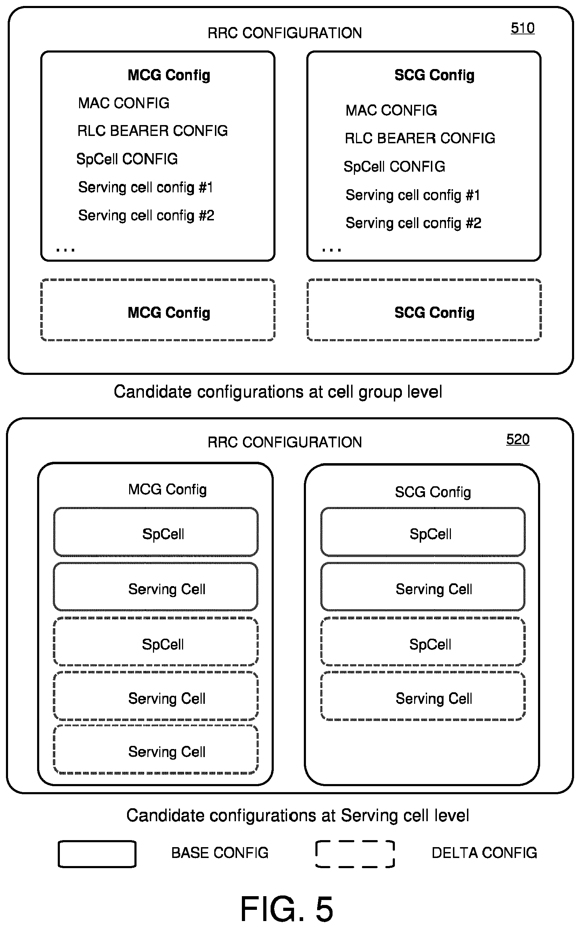

Figure 5 illustrates both cell group level reconfiguration and serving cell level reconfiguration for candidate configuration. For LTM with reconfiguration, the network provides configurations of candidate cells to UE. Signaling optimization is achieved using base and reconfigurable configurations. There is a common base configuration for candidates, and the candidates are modelled as replaceable configurations which are delta configurations on top of the common base configuration. The traditional delta configuration prohibits back-and-forth cell switching, and the existing full configuration means signaling overhead. On the other hand, the proposed signaling optimization allows back-and-forth cell switching, with reduced signaling overhead, by having a base configuration and candidates represented by multiple replaceable configurations.

Candidate configuration at cell group (CG) level is depicted by 510. Network provided multiple MCG (Main cell group) and multiple SCG (Secondary cell group) configurations to UE. The common base MCG and SCG configuration may comprise MAC config, RLC bearer config, SpCell config, and serving cell config, etc. Upon L1/L2-based cell-switching command, the UE activates corresponding CG configuration (including RLC, MAC, and PHY parts), and then the UE performs MAC reset. UE may perform RLC re-establishment, depending on network indication. Configuration above CG level remains the same.

Candidates configuration at serving cell level is depicted by 520. Network configures multiple cells in each cell group for a UE. The cells can be SpCell (Special cell) or SCell (Secondary cell). Upon L1/L2-based cell-switching command, UE activates a different subset of configured cells. The subset contains one SpCell and may contain one or more SCells. Note that SpCell and SCells are all serving cells.

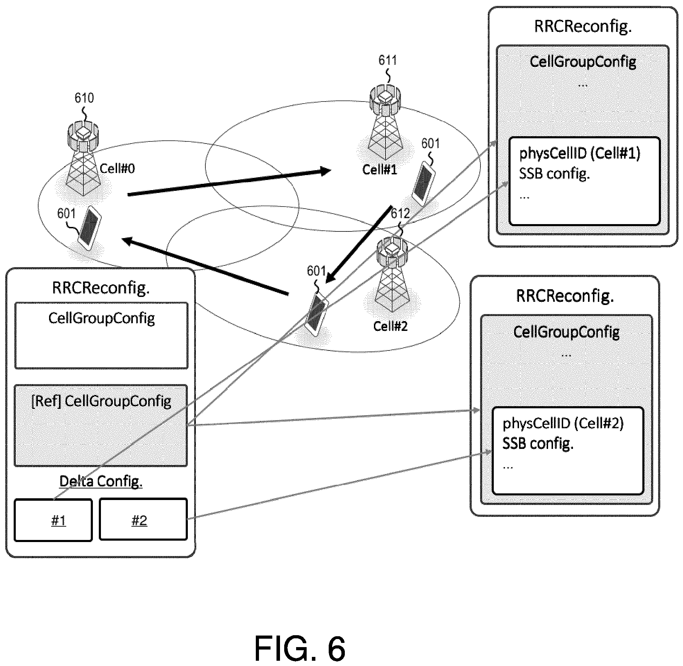

Figure 6 illustrates the concept of base and replaceable configuration for candidate cells to support subsequent LTM with signaling optimization. To support subsequent LTM, there is a common base configuration for candidates, and the candidates are modelled as replaceable configurations which are delta configurations on top of such base configuration, instead of UE's current RRC configuration. The base and replaceable configurations are also referred to as reference configuration and candidate delta configurations, respectively. In the example of Figure 6, UE 601 is originally served by gNB 610 in serving Cell#0. UE 601 receives RRC configurations from the network. The RRC configurations comprise a current UE configuration (cell group configuration for Cell#0), a common base configuration (e.g., the reference configuration), a first replaceable configuration (e.g., delta configuration#1) for candidate Cell#1, and a second replaceable configuration (e.g., delta configuration#2) for candidate Cell#2.

Under L1/L2-based mobility, UE 601 performs handover from Cell#0 to Cell#1. UE 601 applies the target cell configuration for Cell#1 by combining the first replaceable configuration (delta configuration#1) on top of the common base configuration. In one example, the first delta configuration#1 comprises a first physical cell ID for Cell#1, SSB configuration, etc. Later on, UE 601 performs handover from Cell#1 to Cell#2. UE 601 applies the target cell configuration for Cell#2 by combining the second replaceable configuration (delta configuration#2) on top of the common base configuration. In one example, the first delta configuration#2 comprises a second physical cell ID for Cell#2, SSB configuration, etc. UE 601 may hand over to the Cell#0 at a later time, provided that a delta configuration for Cell#0 is provided by the network and maintained by UE 601.

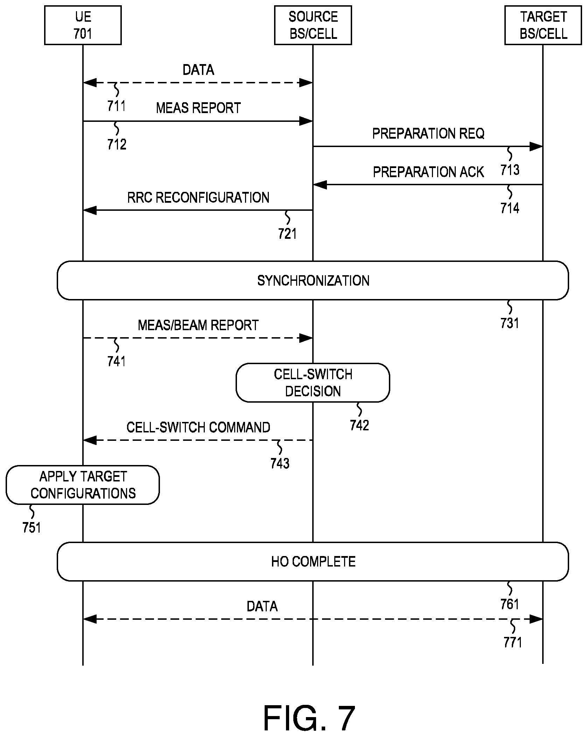

Figure 7 is a message sequence flow between a UE, a source cell, and a target cell for UE mobility with base and replaceable configuration in accordance with one novel aspect. In step 711, UE 701 transmits and receives data with a source base station in a source cell. In step 712, UE 701 sends measurement report of neighboring cells to the source gNB. In step 713, the source gNB makes handover decision and sends a preparation request to a target base station. In step 714, the target gNB sends a preparation acknowledgement back to the source gNB. In step 721, the source gNB provides RRC configurations to UE 701 for a set of candidate cells. For example, one *RRCReconfiguration* message is provided for each candidate target cell configuration. The RRC configurations comprise information for UE to perform synchronization and measurements on the candidate cells, and the base and replaceable configurations required when the candidate cell becomes UEs' serving cell. Later on, the replaceable configuration (delta configuration) can be applied on top of the base (reference) configuration to form a complete candidate configuration.

In step 731, UE 701 performs synchronization for candidate cells. In the downlink, UE 701 performs fine time-frequency tracking for at least some beams of the candidate cells. In the uplink, UE 701 performs pre-RACH for timing advance (optional). In step 741, UE 701 sends measurement or beam report to the source gNB. In step 742, the source gNB makes cell-switch decision. In step 743, the source gNB sends a cell-switch command to UE 501. Upon receiving the cell switching command, the cell switching command can be L1/L2 signal. In step 751, UE 701 applies target cell configuration, which is the replaceable (delta) configuration on top of the base (reference) configuration. UE 701 detaches from the source cell, but UE 701 may keep the RRC configurations of the source cell and the candidate cells. In step 761, the handover procedure is completed. In step 771, UE 701 starts data transmission and reception in the target cell.

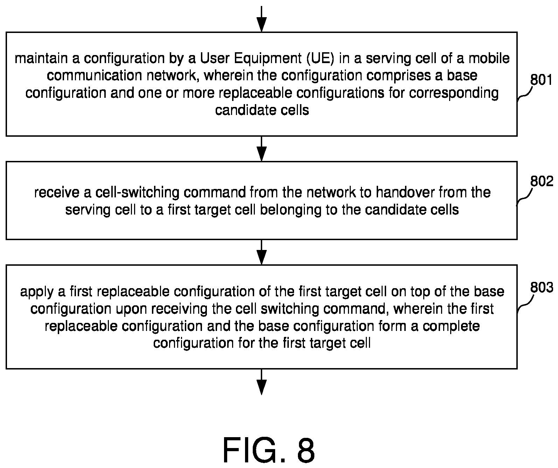

Figure 8 is a flow chart of a method of L1/L2-based mobility with signaling optimization using base and replaceable configuration for candidate cells in accordance with one novel aspect. In step 801, a UE maintains a configuration in a serving cell of a mobile communication network, wherein the configuration comprises a base configuration and one or more replaceable configurations for corresponding candidate cells. In step 802, the UE receives a cell-switching command from the network to handover from the serving cell to a first target cell belonging to the candidate cells. In step 803, the UE applies a first replaceable configuration of the first target cell on top of the base configuration upon receiving the cell switching command, wherein the first replaceable configuration and the base configuration form a complete configuration for the first target cell.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, comprising:
maintaining (801) a configuration by a User Equipment (201), UE, in a serving cell of a mobile communication network, wherein the configuration comprises a base configuration and one or more replaceable configurations for corresponding candidate cells;
receiving (802) a cell-switching command from the network to handover from the serving cell to a first target cell belonging to the candidate cells; and
applying (803) a first replaceable configuration of the first target cell on top of the base configuration upon receiving the cell switching command, wherein the first replaceable configuration and the base configuration form a complete configuration for the first target cell.

2. The method of Claim 1, wherein the configuration is contained in a radio resource control, RRC, reconfiguration message sent from the network.

3. The method of Claim 2, wherein the base configuration is modified by another RRC reconfiguration message.

4. The method of Claim 2, wherein the replaceable configuration is modified by another RRC reconfiguration message.

5. The method of Claim 1, wherein the base configuration comprises configuration information for each serving cell or for each cell group.

6. The method of Claim 5, wherein the replaceable configuration is for the serving cell, and wherein the replaceable configuration comprises a physical cell ID and SSB configuration of a corresponding candidate cell.

7. The method of claim 5, wherein the replaceable configuration is for a cell group, and wherein the replaceable configuration comprises configuration of a SpCell and one or more SCells of a corresponding candidate cell.

8. The method of Claim 1, wherein the UE (201) switches from the first target cell to a second target cell by applying a second replaceable configuration of the second target cell on top of the base configuration.

9. The method of Claim 8, wherein the second replaceable configuration and the base configuration form a complete configuration for the second target cell.

10. The method of Claim 1, wherein the UE is equipped with more than one radio link control or media access control (RLC/MAC) protocol stacks and more than one physical layer hardware modules.

11. A User Equipment (201), UE, comprising:
a control circuit (270) that maintains (801) a configuration in a serving cell of a mobile communication network, wherein the configuration comprises a base configuration and one or more replaceable configurations for corresponding candidate cells;
a receiver (204) that receives (802) a cell-switching command from the network to handover from the serving cell to a first target cell belonging to the candidate cells; and
a handover handling circuit (273) that applies (803) a first replaceable configuration of the first target cell on top of the base configuration upon receiving the cell switching command, wherein the first replaceable configuration and the base configuration form a complete configuration for the first target cell.

12. The UE (201) of Claim 11, wherein the configuration is contained in a radio resource control, RRC, reconfiguration message sent from the network.

13. The UE (201) of Claim 12, wherein the base configuration is modified by another RRC reconfiguration message.

14. The UE (201) of Claim 12, wherein the replaceable configuration is modified by another RRC reconfiguration message.

15. The UE (201) of Claim 11, wherein the base configuration comprises configuration information for each serving cell or for each cell group.
